# EUROPEAN PATENT SPECIFICATION

(11) **EP 0 356 939 B1**
(45) Date of publication and mention of the grant of the patent: **29.12.1993**
(21) Application number: 89115725.7
(22) Date of filing: 25.08.1989
(51) Int. Cl.: G11B 21/08

(54) **Device for controlling an access operation of an information recording and reproducing device**
Vorrichtung zur Zugriffsteuerung bei einem Informationsaufzeichnungs- und -wiedergabegerät
Dispositif de commande d'une opération d'accès pour un appareil d'enregistrement et de lecture d'information

(30) Priority: 25.08.1988 JP 212963/88
(43) Date of publication of application: 07.03.1990
(73) Proprietor: SHARP KABUSHIKI KAISHA, Osaka 545 (JP)
(72) Inventor: Taguchi, Aisaku, Tenri-shi Nara-ken (JP); Horie, Nobuyuki, Tenri-shi Nara-ken (JP); Yamanaka, Toshihiro, Ikoma-shi Nara-ken (JP); Yamane, Daiji, Tenri-shi Nara-ken (JP)
(74) Representative: TER MEER STEINMEISTER & PARTNER GbR

(56) References cited:
- EP-A- 0 321 886
- US-A- 3 699 555
- PATENT ABSTRACTS OF JAPAN vol. 8, no. 171 (P-293)(1608) 8 August 1984 & JP-A-59-65975
- PATENT ABSTRACTS OF JAPAN vol. 6, no. 84 (P-117)(962) 22 May 1982 & JP-A-57-20969
- PATENT ABSTRACTS OF JAPAN vol. 6, no. 125 (P-127)(1003) 10 July 1982 & JP-A-57-50360

## Description

### BACKGROUND OF THE INVENTION

The present invention relates to an access control device for a disk-based recording and reproducing system, and particularly to an access control device which is so designed as to provide a high precision rough access to a target position by preparing in advance reference velocity information corresponding to various access target positions.

The access methods used in devices which record to and/or reproduce a disk-shaped recording medium in which information is recorded in concentric tracks or a spiral track divided into a specific number of recording units generally include rough and precision access control. Rough access is used to position a recording/reproducing portion such as a head or a pick-up near a target track. Precision access following this positions the recording/reproducing portion using servo control to the final target track and sector. Rough access is usually accomplished by means of a linear motor or similar drive, and by increasing the rough access precision, the time required for precision access can be shortened and the efficiency of the system can as a result be increased.

Conventional control of acceleration and deceleration in the rough access operation was based on time. However, control based on time for acceleration and deceleration imposes a limit on the amount of precision which can be achieved.

Furthermore, according to the conventional method, because the time interval between output pulses from a scale or other similar device is measured and the velocity of the recording/reproducing portion is calculated from the result of this measurement, there is a delay in control equivalent to the time required for this calculation.

The present first inventor, et al. of the present invention have previously propose as one solution of solving these problems a device for controlling a rough access operation for a recording/reproducing system, including a recording/reproducing portion which records to and/or reads from a recording medium, a velocity detector which detects a travel velocity of the recording/reproducing portion and a travel signal generator which generates a travel signal corresponding to the movement of the recording/reproducing portion, a counter which counts the output from the travel signal generator, an intermediate position detector which detects the intermediate value or midpoint of an access distance based on the count value obtained by the counter, a reference velocity table which generates a velocity used for triangular control in which the velocity is accelerated during a first half of the rough access and decelerated during a second half of the rough access, a comparator which compares the reference velocity generated from the reference velocity generator with the travel velocity detected by the velocity detector, and a drive mechanism which adjusts the travel velocity of the recording/reproducing portion based on the result of the comparison by the comparator; the device so comprised uses the relationship between information identifying physical positions and velocities of the recording/reproducing portion and preprogrammed reference velocity information to provide high precision rough access control (Japanese Patent Application No. 62-113383, Laid-open No. 63-279478) published 16.11.88.

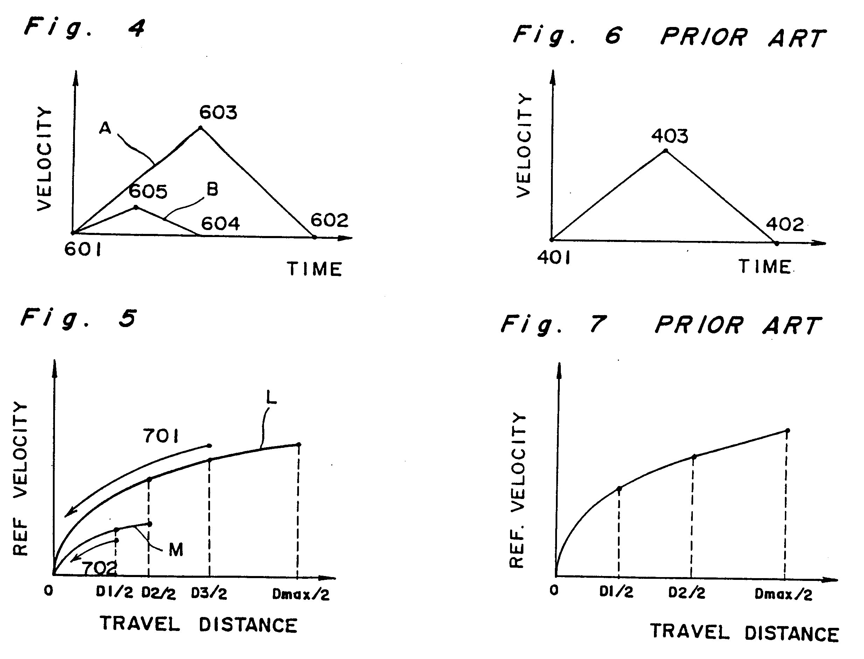

As shown in Fig. 6, the triangular control used in this device accelerates the recording/reproducing portion to midpoint 403, and then decelerates the portion after midpoint 403. In the reference velocity table which produces velocities used for this control, a 1:1 relationship is established between the travel distances and the reference velocity information as shown in Fig. 7.

As can be seen from Fig. 7, the movement of a linear motor used to drive an actuator carrying the recording/reproducing portion during rough access is that of an accelerated body. Inertia acts on the actuator driven horizontally by the linear motor, and the posture of the actuator tends to be biased from the vertical. In the above access control method, a separate posture control is therefore applied to hold the actuator in a vertical position. However, while it is thus possible to maintain a vertical posture in access over a long distance, because the time available for posture control during short distance access is too short, the control circuit is thus not able to completely maintain a vertical posture of the actuator and actuator posture control deteriorates, causing the actuator to vibrate at a final stage of the rough access. As a result, a time delay is required before a servo control begins for driving the actuator in the precision access stage. This problem is particularly serious because the amplitude of the vibration of the actuator becomes extremely large when the vibration frequency of the actuator at the completion of the rough access matches the natural oscillation of the actuator.

US-A-3699555 discloses the principle to accelerate with a fixed rate up to the midpoint and then to decelerate with the same rate. The midpoint is derived from the speed signal.

JP-A-59-65975 discloses to use different speed profiles for different seek distances.

### SUMMARY OF THE INVENTION

Therefore, the object of the present invention is to provide an improvement to the recently proposed rough access control device, which can accomplish rough access quickly and stably even when the access distance is short, and which can quickly begin a servo control operation for precision access.

In order to achieve the above object, a basic feature of a rough access control device of the present invention as defined in appended claim 1, lies in that either of two kinds of reference velocity generators are used depending on whether an access distance which must be traveled for rough access is long or short.

One of the reference velocity generators is a first reference velocity generator which when a distance determination means determines that the access distance is long generates a series of first reference velocities for the recording/reproducing means so as to accelerate recording/reproducing means such as a head or a pick-up from an access start position to the midpoint of the access distance, and then decelerate from said midpoint to an access target position, and the other is a second reference velocity generator which when the distance determination means determines that the access distanc is short generates a series of second reference velocities for the recording/reproducing means so as to accelerate the recording/reproducing means from the access start position to the midpoint of the access distance, and decelerate from said midpoint to the access target position. Advantageously, the pattern of the second reference velocities has a slope more gradual than that of the first reference velocities.

In order to determine which reference velocity generator should be used, the access control device includes the distance determination means which compares an access distance which must be traveled for rough access with a reference value and thus determines whether the access distance is long or short.

Another feature of the access control device of the present invention is that the midpoint of an actual access distance can be precisely detected by a midpoint detection means which compares a median value of the access distance which must be traveled for rough access with a value counted by a counting means and corresponding to an actual travel distance and thereby detects the midpoint.

The counting means obtains the above value corresponding to an actual travel distance of the recording/reproducing means in cooperation with a travel signal generator which generates a travel signal according to the travel distance of the recording/reproducing means.

The access control device of the present invention also has a velocity detection means which detects an actual traveling velocity of the recording/reproducing means while the recording/reproducing means is traveling, a comparator which compares the first reference velocity generated by the first reference velocity signal generator or the second reference velocity signal generated by the second reference velocity signal generator with the travel velocity detected by the velocity detection means, and a drive means which regulates a traveling velocity of the recording/reproducing means based on the result of a comparison by the comparator.

Using the device according to the present invention, when an access command is received, the access distance determination means compares the access distance which must be traveled by the recording/reproducing means for rough access with a specific value to determine whether the access distance is long or short. Thus when the rough access process begins, the travel signal corresponding to the travel of the recording/reproducing means and output by the travel signal generator is counted by the counter. This count is compared by the midpoint detector with the median value of the distance to be traveled for rough access, and the actual midpoint of the access distance is thus detected by the midpoint detector.

When the access distance is determined by the access distance determination means to be long, a series of first reference velocities for the recording/reproducing means are generated by the first reference velocity generator. The pattern of the first reference velocities is to accelerate the recording/reproducing means until the midpoint detector detects the midpoint, and to decelerate thereafter.

If the rough access distance is determined to be short by the access distance determination means, a series of second reference velocities for the recording/reproducing means whose pattern has a slope more gradual than that of the first reference velocities are generated by the second reference velocity generator. According to the second reference velocities, the recording/reproducing means also accelerates until the midpoint is detected by the midpoint detector and then decelerates thereafter, but the respective acceleration and deceleration are smaller than when the access distance is determined to be long. During this rough access operation, the comparator compares the first reference velocity generated by the first reference velocity generator or the second reference velocity generated by the second reference velocity generator with an actual travel velocity detected by the velocity detection means, and the travel velocity of the recording/reproducing means is therefore adjusted by the drive means based on this comparison result.

According to the present invention, because the distance to be traveled for rough access is determined to be long or short by the access distance determination means, and either the first reference velocity or second reference velocity is generated depending on the access distance, the rate of acceleration when accessing short distances is less at each point when compared with the rate of acceleration when accessing long distances. As a result, the diagonal displacement of the posture of the actuator driven by the linear motor to carry the recording/reproducing means in a horizontal direction is small. Also, because the access time for a short distance can be extended and thus the time for posture control can be extended, vibrations in the actuator can be suppressed, and stable rough access can be achieved. Furthermore, this also makes it possible to change quickly to the servo control operation required for precision access, and thus enables fast, high precision positioning to the final target track.

Furthermore, high precision rough access is possible because the relationship between the physical position and velocity of the recording/reproducing means is used.

Furthermore, according to the present invention, because a closed loop is formed using the velocity detection means and the comparator, real-time control in which operational processing time is not required is possible.

In addition, if the first and second reference velocity generators are tables and they are read forward to the midpoint of the access distance and backward from the midpoint to the final access target position, the amount of data stored in the tables can be minimized.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a basic block diagram of a device employing the present invention;
Fig. 2 is a block diagram of a rough access control portion in the device of Fig. 1;
Fig. 3 is a flow chart showing a rough access control process;
Fig. 4 is a diagram of the velocity control according to the present invention;
Fig. 5 is a figure showing a reading method used for the reference velocity information;
Fig. 6 shows the velocity control according to a conventional method; and
Fig. 7 shows the relationship between travel distance and reference velocity information according to the conventional method.

### DETAILED DESCRIPTION OF PREFERRED EMBODIMENTS

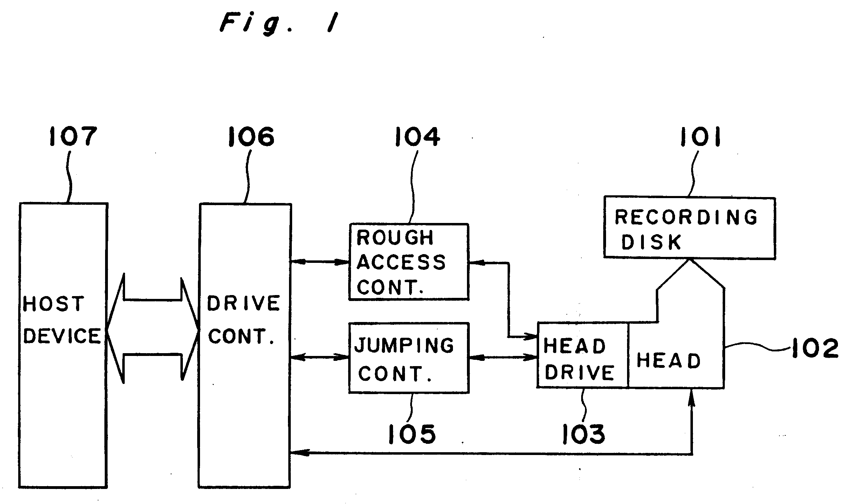

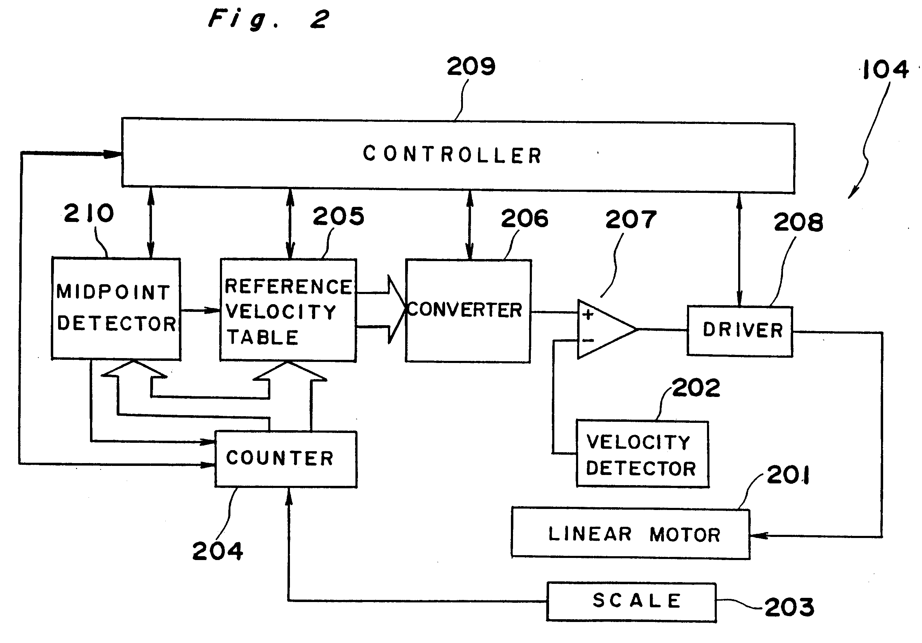

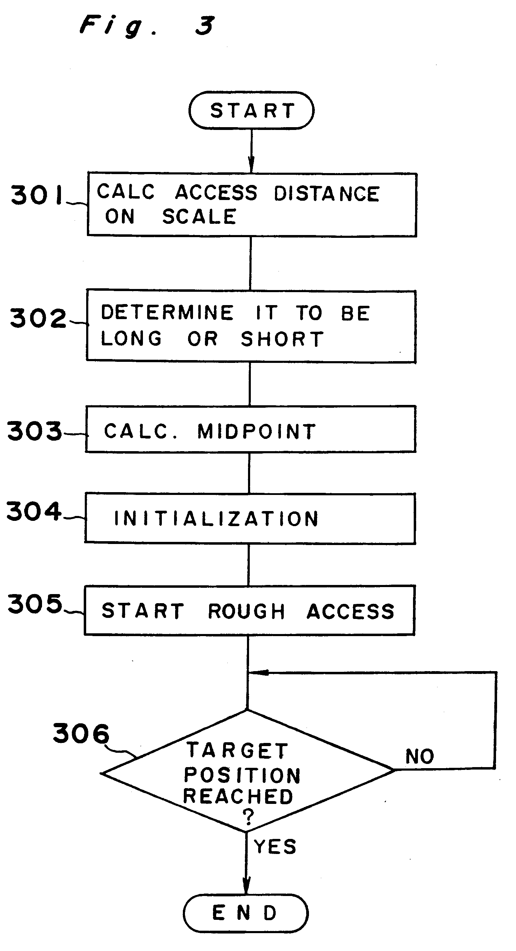

Fig. 1 is a basic block diagram of a device employing the present invention, Fig. 2 is a detailed block diagram of a rough access control unit, Fig. 3 is a flow chart showing a rough access control process according to the present invention, Fig. 4 is a descriptive diagram of the access control method according to the present invention, and Fig. 5 is a figure showing the relationship between travel distances and the reference velocity information according to the present invention.

In Fig. 1, reference number 101 is a recording disk as a disk-shaped recording medium having recording tracks which are spiral or concentric and which are divided into multiple sectors which are the recording unit, 102 is a head as recording/reproducing means used to record to or read from recording medium 101 (102 may be a pickup or other devices), 103 is a head drive mechanism which positions head 102, 104 is a rough access controller used for rough access control of head 102, 105 is a jumping controller 105 used for precision access, 106 is a drive controller used to control the overall device, and 107 is a host device, which may be a computer or other device controlling the drive mechanism. Head drive mechanism include a linear motor and an actuator driven by the linear motor and carrying head 102.

In Fig. 2, 201 is the linear motor to drive the actuator (not shown) carrying the head; 202 is a velocity detector which detects a velocity (magnitude and direction) of linear motor 201; 203 is a scale which detects the travel distance and direction of linear motor 201 and generates a pulse signal according to the travel and direction of linear motor 201; 204 is a counter which counts the pulse signals generated by scale 203; 205 is a reference velocity table as reference velocity generator which generates a reference velocity according to both the distance to be traveled for rough access and the value counted by counter 204 which is the actual travel distance of linear motor 201; reference velocity table 205 is comprised of a ROM or similar device. As will be described in detail later, reference velocity table 205 is comprised of two tables: a first reference velocity table which generates first reference velocities for head 102, or rather for linear motor 201, when the distance to be traveled for rough access is long, and a second reference velocity table which generates second reference velocities whose pattern has a slope more gradual than that of the first reference velocities when the access distance is short. Either the first or second reference velocity table is used according to whether the access distance is long or short. Furthermore, 206 is a convertor which may be a digital to analog convertor and which makes it possible to compare the output of velocity detector 202 with the output of reference velocity table 205; 207 is a comparator that compares the outputs of velocity detector 202 and reference velocity table 205; 208 is a driver controlled by the output of comparator 207 so as to drive linear motor 201; 210 is a midpoint detector that compares a midpoint in the distance to be traveled for rough access with the value of counter 204 and thus detects the actual midpoint of the access distance; and 209 is a controller that controls these various components.

The operation of the device so constructed is described hereinbelow with reference to Fig. 1 to Fig. 5.

The rough access operation is executed when an access command is received from host device 107 and it is recognized by drive controller 106 that the rough access is necessary. Since this rough access procedure is based on scale 203, controller 209 first calculates what value the distance to be traveled for rough access would be on scale 203. The result of this calculation is then compared with a specific preprogrammed value to determine whether the access distance is long or short. This result is then output to reference velocity table 205; if the result is a long distance, a corresponding first reference velocity is read out from the first reference velocity table when the rough access begins; if the result is a short distance, a second reference velocity is read out from the second reference velocity table when the rough access begins. Before the rough access begins, controller 209 calculates what value on scale 203 one-half the distance to be traveled for the rough access would be, outputs the result to midpoint detector 210 and initializes the entire device. This procedure corresponds to steps 301-304 in Fig. 3.

In order to minimize the total access time, the device according to the present invention causes the linear motor to accelerate from the rough access start point to the midpoint of the rough access distance, and to decelerate from the midpoint to the rough access end point, applying so-called triangular control. The triangular control in the present invention differs from that of the conventional system in which there is only one reference velocity relationship for the travel distance as shown in Figs. 6 and 7. As shown in Fig. 4, either of two kinds of triangular control is applied depending upon the length of the access distance.

Specifically, (1) if the access distance is long, the velocity gradient is large as shown by line A in Fig. 4; 2) if the access distance is short, the velocity gradient is smaller than that of line A, as shown by line B in the figure, so that the rate of acceleration and deceleration at all points along the line B is less than that of the corresponding point on line A.

Thus, the inclination in the posture of the actuator driven horizontally by the linear motor 201 can be minimized, the access time when the access distance is short can be extended to increase the amount of time used for actuator posture control, and thus vibration of the actuator when the rough access is completed can be prevented. It is therefore possible to quickly begin the servo control required for the precision access operation following the rough access.

In order to accomplish this type of control, the size of the table used to store the travel velocity data required for all long and short access distances will be extremely large.

Therefore, in order to avoid such a problem, the actual midpoint in the access distance is detected by a midpoint detector 210 associated with counter 204 to change the reading method used to obtain data from the first and second reference velocity tables 205.

Specifically, as shown bv lines A, B in Fig. 4, the first and second reference velocities for long and short access distances are both symmetrical about midpoints 603, 605. By reversing the direction in which the velocity tables are read at midpoints 603, 605, the reference velocity data in the table for acceleration can be also used for deceleration. Thus, in the present embodiment, the first and second reference velocity tables are set as shown by curves L and M, respectively, in Fig. 5. In Fig. 5, the distance traveled in the rough access process is plotted on the abscissas, and the reference velocity information is plotted on the ordinates.

For example, suppose that the value corresponding to travel distance D2 is the specific value to determine whether the access distance to be traveled is long or short, in other words, that value is a switching point between long distance access and short distance access. If it is now assumed that a point with an access distance D3 greater than that of D2, is to be accessed, the first reference velocity data are read from the first reference velocity table in the normal direction from travel distance 0 to midpoint D3/2, and the velocity information is read from the first reference velocity table in the reverse direction (701) from midpoint D3/2 to the access target position D3.

Likewise, if a distance less than D2, for example D1, is to be accessed, the second reference velocity table is used in place of the first reference velocity table, and the required data are read using the same technique applied with the long access distance. Specifically, the second reference velocity data are read from the second reference velocity table in the normal direction from travel distance 0 to midpoint D1/2, and from midpoint D1/2 to the access target position D1, the information is read from the second reference velocity table in the reverse direction (702). Thus, it is not necessary to prepare a large-sized velocity information table for all travel distances. If the maximum access distance in this device is assumed to be Dmax, all rough access distances can be processed if the values of up to Dmax/2 are provided in the first reference velocity table and the values of up to D2/2 are provided in the second reference velocity table, and the amount of data stored in the first and second reference velocity tables, and therefore the size of the tables, can be kept very small. In this case, midpoint detector 210 detects the midpoint of the access distance, and thus controls the reading of data from the table in the reverse direction.

Once the rough access begins (step 305 in Fig. 3), counter 204 begins to count the output generated by scale 203. The output of counter 204 is input to the first or second reference velocity table of reference velocity table 205, and a reference velocity corresponding to the count, specifically to the travel distance, is obtained as the output of reference velocity table 205.

The output of reference velocity table 205 is converted by convertor 206 to an analog form such that it can be compared with the output of velocity detector 202. The comparator 207 compares the output of convertor 206 with the output of velocity detector 202, and outputs the difference signal resulting from this comparison to driver 208. The linear motor 201 is driven by driver 208 according to this difference signal. The velocity information of linear motor 201 is fed back by velocity detector 202 and compared by comparator 207 in a closed loop so that the velocity of linear motor 201 is regulated to be the velocity output from reference velocity table 205.

When the output of counter 204 reaches the target value, the rough access process is completed (step 306 in Fig. 3).

In this preferred embodiment, reference velocity table 205 is comprised of the first reference velocity table for long access distances and the second reference velocity table for short access distances, and data reading is switched between these first and second reference velocity tables according to the distance to be traveled for rough access, but it is also possible to provide only the first reference velocity table for long distances and to calculate the second reference velocities for short distances based on the velocity data obtained from the first reference velocity table.

## Claims

1. A device for controlling an access operation of an information recording and reproducing device to a target position for rough access in a disk-shaped recording medium (101) prior to a precision access to a final target position, the recording medium (101) having concentric tracks or a spiral track divided into multiple sectors, comprising:
a recording/reproducing means (102) for recording to and reading from said recording medium (101);
a velocity detection means (202) which detects an actual travel velocity of the recording/reproducing means (102) while the recording/reproducing means is traveling,
a travel signal generator (203) which generates a travel signal according to a travel distance of the recording/reproducing means;
a counting means (204) which counts output from the travel signal generator;
a midpoint detection means (210);
a first reference velocity generator (205) which generates a series of first reference velocities for the recording/reproducing means (102) so as to accelerate the recording/reproducing means from an access start position to the midpoint of the access distance, and then to decelerate from said midpoint to an access target position;
a comparator (207) which compares the first reference velocity generated by the first reference velocity generator (205) with the travel velocity detected by the velocity detection means; and
a drive means (103, 208, 201) which regulates a travel velocity of the recording/reproducing means based on the result of a comparison by the comparator (207); characterised in that
said midpoint detection means compare a median value of the access distance which must be traveled for rough access with a value counted by said counting means and thereby detects an actual midpoint of the access distance; and in that the device further comprises:
a distance determination means (209) which compares an access distance which must be traveled for rough access with a reference value and thus determines whether the access distance is long or short; and
a second reference velocity generator (205) which generates a series of second reference velocities for the recording/reproducing means (102) so as to accelerate the recording/reproducing means from the access start position to the midpoint of the access distance, and to decelerate from said midpoint to the access target position, a pattern of the second reference velocities having a slope more gradual than that of the first reference velocities;
the first reference velocity generator generating said reference velocity when the distance determination means (209) determines that the access distance is long and the second reference velocity generator generating said reference velocity when the distance determination means (209) determines that the access distance is short.

2. The device as claimed in Claim 1, wherein the first and second reference velocity generators (205) are first and second look-up tables, respectively.

3. The device as claimed in Claim 2, wherein the first look-up table (205) stores reference velocity data corresponding to distances up to half of a maximum access distance and the second look-up table (205) stores reference velocity data corresponding to distances up to half of the reference value which is used for determining whether the access distance is long or short, the first and second look-up tables being read out in one direction from the access start position to the midpoint of the access distance and in the opposite direction from the midpoint to the access target position.

## Patentansprüche

1. Vorrichtung zum Steuern des Zugriffablaufs bei einer Informationsaufzeichnungs- und -wiedergabevorrichtung zum Zugreifen auf eine Zielposition durch Grobzugriff bei einem plattenförmigen Aufzeichnungsträger (101) vor einem Präzisionszugriff auf eine endgültige Zielposition, wobei der Aufzeichnungsträger (101) konzentrische Spuren oder eine spiralförmige Spur, unterteilt in mehrere Sektoren, aufweist, mit:
- einer Aufzeichnungs/Wiedergabe-Einrichtung (102) zum Bespielen und Abspielen des Aufzeichnungsträgers (101);
- einer Geschwindigkeitserfassungseinrichtung (202), die die tatsächliche Verstellgeschwindigkeit der Aufzeichnungs/Wiedergabe-Einrichtung (102) erfaßt, während sich diese bewegt;
- einem Verstellsignalerzeuger (203), der ein Verstellsignal abhängig vom Verstellweg der Aufzeichnungs/Wiedergabe-Einrichtung erzeugt;
- einer Zähleinrichtung (204), die das Ausgangssignal des Verstellsignalerzeugers zählt;
- einer Mittelpunkterfassungseinrichtung (210);
- einem ersten Bezugsgeschwindigkeitsgenerator (205), der eine Reihe erster Bezugsgeschwindigkeiten für die Aufzeichnungs/Wiedergabe-Einrichtung (102) erzeugt, um diese von einer Zugriff-Startposition bis zum Mittelpunkt des Zugriffwegs zu beschleunigen, und sie dann von diesem Mittelpunkt bis in die Zugriff-Zielposition zu verzögern;
- einem Komparator (207), der die vom ersten Bezugsgeschwindigkeitserzeuger (205) erzeugte erste Bezugsgeschwindigkeit mit der von der Geschwindigkeitserfassungseinrichtung erfaßten Verstellgeschwindigkeit vergleicht; und
- einer Treibereinrichtung (103, 208, 201), die die Verstellgeschwindigkeit der Aufzeichnungs/Wiedergabe-Einrichtung aufgrund des Ergebnisses des vom Komparator (207) vorgenommenen Vergleichs einstellt;
**dadurch gekennzeichnet**, daß
- die Mittelpunkterfassungseinrichtung den Mittelwert des beim Grobzugriff zurückzulegenden Verstellwegs mit dem von der Zähleinrichtung gezählten Wert vergleicht und dadurch den tatsächlichen Mittelpunkt des Zugriffwegs erfaßt;
**und daß die Vorrichtung ferner aufweist**:
- eine Wegermittlungseinrichtung (209), die den beim Grobzugriff zurückzulegenden Verstellweg mit einem Bezugswert vergleicht und so ermittelt, ob der Zugriffweg lang oder kurz ist; und
- einen zweiten Bezugsgeschwindigkeitsgenerator (205), der eine Reihe zweiter Bezugsgeschwindigkeiten für die Aufzeichnungs/Wiedergabe-Einrichtung (102) erzeugt, um diese ausgehend von der Startposition bis zum Mittelpunkt des Zugriffwegs zu beschleunigen und sie vom Mittelpunkt bis zur Zugriff-Zielposition zu verzögern, wobei ein Muster für die zweiten Bezugsgeschwindigkeiten eine flachere Steigung aufweist als das für die ersten Bezugsgeschwindigkeiten;
- wobei der erste Bezugsgeschwindigkeitserzeuger die Bezugsgeschwindigkeit erzeugt, wenn die Wegermittlungseinrichtung (209) ermittelt, daß der Zugriffweg lang ist, und der zweite Bezugsgeschwindigkeitserzeuger die Bezugsgeschwindigkeit erzeugt, wenn die Wegermittlungseinrichtung (209) ermittelt, daß der Zugriffweg kurz ist.

2. Vorrichtung nach Anspruch 1, bei der der erste und zweite Bezugsgeschwindigkeitserzeuger (205) eine erste bzw. zweite Nachschlagetabelle sind.

3. Vorrichtung nach Anspruch 2, bei der die erste Nachschlagetabelle (205) Bezugsgeschwindigkeitsdaten speichert, die Wegen bis zur Hälfte eines maximalen Zugriffwegs entsprechen, und die zweite Nachschlagetabelle (205) Bezugsgeschwindigkeitsdaten speichert, die Wegen bis zur Hälfte des Bezugswertes entsprechen, der zum Ermitteln, ob der Zugriffweg lang oder kurz ist, verwendet wird, wobei die erste und die zweite Nachschlagetabelle in einer Richtung ausgehend von der Zugriff-Startposition bis zum Mittelpunkt des Zugriffwegs ausgelesen werden, aber in umgekehrter Richtung vom Mittelpunkt bis zur Zugriff-Zielposition.

## Revendications

1. Dispositif pour commander une opération d'accès d'un dispositif d'enregistrement et de reproduction d'informations à une position cible en vue d'un accès approximatif dans un support d'enregistrement en forme de disque (101) avant un accès précis à une position cible finale, le support d'enregistrement (101) comportant des pistes concentriques ou une piste en spirale divisée en multiples secteurs, comprenant:
des moyens d'enregistrement-reproduction (102) pour l'enregistrement et la lecture sur et à partir du support d'enregistrement (101);
des moyens de détection de vitesse (202) qui détectent une vitesse de déplacement réelle des moyens d'enregistrement-reproduction (102) pendant le déplacement des moyens d'enregistrement-reproduction,
un générateur de signaux de déplacement (203) qui génère un signal de déplacement en fonction d'une distance de déplacement des moyens d'enregistrement-reproduction;
des moyens de comptage (204) qui comptent la sortie en provenance du générateur de signaux de déplacement;
des moyens de détection de point médian (210);
un générateur de premières vitesses de référence (205) qui génère une série de premières vitesses de référence pour les moyens d'enregistrement-reproduction (102) de façon à accélérer les moyens d'enregistrement-reproduction depuis une position de début d'accès jusqu'au point médian de la distance d'accès, puis à décélérer lesdits moyens depuis ledit point médian jusqu'à une position cible d'accès;
un comparateur (207) qui compare la première vitesse de référence générée par le générateur de premières vitesses de référence (205); et
des moyens d'entraînement (103, 208, 201) qui régulent la vitesse de déplacement des moyens d'enregistrement-reproduction sur la base du résultat de la comparaison effectuée par le comparateur (207); caractérisé en ce que lesdits moyens de détection de point médian comparent une valeur médiane de la distance d'accès qui doit être parcourue en vue d'un accès approximatif à une valeur comptée par lesdits moyens de comptage et détectent ainsi un point médian réel de la distance d'accès, et en ce que le dispositif comprend, en outre:
des moyens de détermination de distance (209) qui comparent une distance d'accès qui doit être parcourue en vue d'un accès approximatif à une valeur de référence et déterminent ainsi si la distance d'accès est longue ou courte; et un générateur de secondes vitesses de référence (205) qui génère une série de secondes vitesses de référence pour les moyens d'enregistrement-reproduction (102) de façon à accélérer les moyens d'enregistrement-reproduction depuis la position de début d'accès jusqu'au point médian de la distance d'accès, et à décélérer lesdits moyens depuis ledit point médian jusqu'à la position cible d'accès, la configuration des secondes vitesses de référence présentant une pente plus progressive que celle des premières vitesses de référence, le générateur de premières vitesses de référence générant ladite vitesse de référence lorsque les moyens de détermination de distance (209) déterminent que la distance d'accès est longue et le générateur de secondes vitesses de référence générant ladite vitesse de référence lorsque les moyens de détermination de distance (209) déterminent que la distance d'accès est courte.

2. Dispositif selon la revendication 1, dans lequel les générateurs de premières et secondes vitesses de référence (205) sont, respectivement, de première et seconde tables de consultation.

3. Dispositif selon la revendication 2, dans lequel la première table de consultation (205) emmagasine des données de vitesse de référence correspondant à des distances allant jusqu'à la moitié d'une distance d'accès maximale et la seconde table de consultation (205) emmagasine des données de vitesse de référence correspondant à des distances allant jusqu'à la moitié de la valeur de référence qui est utilisée pour déterminer si la distance d'accès est longue ou courte, les première et seconde tables de consultation étant lues dans une direction à partir de la position de début d'accès jusqu'au point médian de la distance d'accès et dans la direction opposée à partir du point médian jusqu'à la position cible d'accès.
